# EUROPÄISCHE PATENTANMELDUNG

(11) **EP 3 136 320 A1**
(43) Veröffentlichungstag der Anmeldung: **01.03.2017**
(21) Anmeldenummer: 16184148.1
(22) Anmeldetag: 15.08.2016
(51) Int. Cl.: G06Q 10/08

(54) **VERFAHREN UND ANORDNUNG ZUM ERFASSEN UND BESTELLEN VON WAREN**

(30) Priorität: 28.08.2015 DE 102015011346
(71) Anmelder: SFS intec Holding AG, 9435 Heerbrugg (CH)
(72) Erfinder: SIMMA, Lukas, 6914 Hohenweiler (AT); RUSCH, Guido, 9032 Engelburg (CH); DIETSCHE, Patrick, 9444 Diepoldsau (CH); ZELLWEGER, Dominic, 9434 Au (CH)

(57) **Zusammenfassung**

Gezeigt und beschrieben sind ein Verfahren und eine Anordnung zum Erfassen und Bestellen von Waren zur Aufrechterhaltung eines Warenbestands in wenigstens einem mobilen Warenträger (16). Dem Warenträger (16) ist ein Sensor (11) zugeordnet, der ihn zyklisch abtastet, um einen Parameter (Füllstand, Menge, Lage oder Gewicht) eines Warenbestands in dem Warenträger (16) mittels einer Steuereinrichtung (10) in langen Zeitintervallen in einem Standby-Modus zu erfassen. Das Abtasten in langen Zeitintervallen wird beibehalten, bis die Steuereinrichtung (10) eine Parameteränderung aus dem Sensor (11) erfasst. In diesem Fall erfolgt ein zyklisches Abtasten des Sensors (11) in wesentlich verkürzten Zeitintervallen in einem Event-Modus. Außerdem wird ein Bestellsignal an eine Datenbank (19) gesendet und die Steuereinrichtung (10) in den Standby-Modus zurückversetzt. Die Anordnung enthält eine Batterie (20). Durch Reduzieren des energieaufwändigen Sendens wird der Stromverbrauch so minimiert, dass die Batterie beispielshalber bis zu 10 Jahre Strom liefern kann.

## Beschreibung

Die Erfindung betrifft ein Verfahren zum Erfassen und Bestellen von Waren zur Aufrechterhaltung eines Warenbestands in wenigstens einem mobilen Warenträger. Außerdem betrifft die Erfindung eine Anordnung zur Durchführung des Verfahrens, mit wenigstens einem mobilen Warenträger, wenigstens einem Sensor zum Erfassen eines Parameters (Füllstand, Menge, Lage oder Gewicht) eines Warenbestands in dem Warenträger zum Senden eines Parameteränderungssignals an eine Datenbank zum Auslösen einer Bestellung von Ware(n) zum Kompensieren der Parameteränderung und einer Batterie zur Stromversorgung der Anordnung.

Eine Anordnung und ein Verfahren dieser Art sind aus dem Dokument DE 10 2007 031 174 B4 bekannt. Bei dieser bekannten Anordnung werden mehrere sich an einem Aufbewahrungsort befindliche Gegenstände mit dem Ziel überwacht, deren individuell veränderbares Anordnungsverhältnis bezüglich des Aufbewahrungsortes zu überwachen. Insbesondere wird dabei ein sich füllstandsbedingt änderndes Anordnungsverhältnis von Behältern zum Aufbewahrungsort, beispielsweise einem Regal, zur Erleichterung und Vereinfachung des Bestellvorgangs überwacht. Die Anordnung umfasst eine von dem Aufbewahrungsort entfernt angeordnete Auswerteinheit und kabellose Übertragungsmittel zur Übertragung der Behälter spezifischen Lageinformation von den Mitteln, die zur Bestimmung der Lageinformation vorgesehen sind, an die Auswerteeinheit. Durch die Korrelation zwischen dem Füllstand und dem Anordnungsverhältnis zwischen Behälter und Aufbewahrungsort wird der Auswerteeinheit eine den Füllzustand des Behälters betreffende Information übermittelt und ein entsprechendes Signal erzeugt, wodurch ein Nachfüllvorgang schnell und effizient ausgelöst werden kann. Über eine Stromversorgung der Behälter finden sich in diesem Dokument keine Angaben.

Von der Anmelderin sind inzwischen Systeme für eine Lagerbewirtschaftung entwickelt worden, die sich nicht mehr auf das Erfassen der Ausrichtung eines Warenbehälters gegenüber dem Aufbewahrungsort beschränken und auch nicht mehr an ein spezifisches Gestell gebunden sind. Einzelheiten zu diesen Systemen zur Lagerbewirtschaftung finden sich in vier Prospekten aus April 2015, die jeweils den Druckvermerk SFS unimarket, D-BT, 04/15, 2000, d tragen.

Bei einem der vier Systeme zur Lagerbewirtschaftung wird die Bestellung ausgelöst, wenn ein unterteilter Behälter gedreht wird, um auf einen Reservebestand zuzugreifen ("turn-LOG 2 Gedreht, bestellt, geliefert!"). Bei einem anderen System, "reachLOG Bestellauslösung durch Füllstandssensor", wird stetig die Füllmenge im Warenbehälter überwacht und bei einem vordefinierten Bestand die Bestellung ausgelöst. Das letztgenannte dieser Systeme kommuniziert wie die anderen Systeme drahtlos, benötigt keinen Stromanschluss und soll bis zu zehn Jahre wartungsfrei funktionieren. Die dafür erforderliche Batterie, die jedem Warenbehälter zugeordnet ist, darf demgemäß nicht so belastet werden, dass sie weniger als zehn Jahre Strom liefert.

Bei einem dritten System zur Lagerbewirtschaftung mit der Bezeichnung "weightLOG 2 Das selbstbestellende Wägesystem" erfolgt die Bestellauslösung, sobald ein vordefiniertes Gewicht unterschritten wird.

Bei dem vierten System zur Lagerbewirtschaftung mit der Bezeichnung "pushLOG 2 Bestellung auf Knopfdruck" erfolgt die Bestellung auf Knopfdruck.

Aus dem Dokument DE 10 2013 222 263 A1 sind ein Warenbestandsverwaltungssystem und ein Verfahren zum Verwalten eines Warenbestands bekannt, bei denen in einer Mehrzahl von mit Warenelementen befüllten und/oder zu befüllenden Befülleinrichtungen ein Befüllzustand detektiert wird, damit bei Bedarf eine Befüllung ausgelöst wird. Die Befülleinrichtungen können dabei mit RFID-Tags versehen werden. Über die Stromversorgung des Warenbestandsverwaltungssystems finden sich in diesem Dokument keine Angaben.

Im Dokument DE 10 2005 041 315 A1 wird ein System zur Ermittlung des Reifenfülldruckes beschrieben, bei dem ein batterieloser Sender via Funk mittels sogenannter Ladewellen eine Energieversorgung erhält und so selbst keine Batterie erfordert.

Aufgabe der Erfindung ist es, ein Verfahren und eine Anordnung der eingangs genannten Art so auszubilden, dass eine gewünschte Mindestlebensdauer einer jedem Warenbehälter zugeordneten Batterie erzielt wird.

Diese Aufgabe ist ausgehend von einem Verfahren der eingangs genannten Art durch die Schritte gelöst: Zyklisches Abtasten eines dem Warenträger zugeordneten Sensors zum Erfassen eines Parameters (Füllstand, Menge, Lage oder Gewicht) eines Warenbestands in dem Warenträger mittels einer dem Warenträger zugeordneten Steuereinrichtung in langen Zeitintervallen in einem Standby-Modus, Feststellen, ob die Steuereinrichtung eine Parameteränderung aus dem Sensor erfasst, wenn nein, Wiederholen des Abtastens in den langen Zeitintervallen, wenn ja, zyklisches Abtasten des Sensors in wesentlich verkürzten Zeitintervallen in einem Event-Modus, Senden eines eventbasierten Triggersignals als Bestellsignal an die Datenbank und Zurückversetzen der Steuereinrichtung in den Standby-Modus.

Ausgehend von einer Anordnung der eingangs genannten Art ist die Aufgabe erfindungsgemäß gelöst durch eine Anordnung zur Durchführung des Verfahrens mit einer Steuereinrichtung zum zyklischen Abtasten des Sensors und, bei Erkennen einer Parameteränderung, zu einer Freigabe des Sendens eines Parameteränderungssignals an die Datenbank zum Auslösen der Bestellung.

Das Verfahren und die Anordnung ermöglichen das Einhalten einer gewünschten Lebensdauer einer Batterie durch zyklisches und somit stromsparendes Abtasten eines jedem Warenträger zugeordneten Sensors in langen Zeitintervallen in einem Standby-Modus und zyklisches Abtasten jedes Sensors in wesentlich verkürzten Zeitintervallen in einem Event-Modus. Dadurch wird die Batterie so geschont, dass sie wie gewünscht zum Beispiel zehn Jahre Strom liefert. Ein Sendevorgang wird erfindungsgemäß nämlich immer nur dann ausgelöst, wenn eine Änderung eines Parameters wie Füllstand, Menge, Lage oder Gewicht tatsächlich erkannt wird. Dabei können zusätzliche Maßnahmen getroffen werden, die gewährleisten, dass eine Bestellung nur dann ausgelöst wird, wenn ein echter Bedarf besteht, also zum Beispiel dann nicht, wenn sich eine Bedienungsperson bei der Auslösung eines Tasters geirrt hat oder wenn zum Beispiel ein Warenbehälter versehentlich in eine andere Lage gebracht wird oder versehentlich eine andere Neigung erhält.

Vorteilhafte Ausgestaltungen des Verfahrens nach der Erfindung bilden die Gegenstände der abhängigen Ansprüche.

In einer Ausgestaltung des Verfahrens nach der Erfindung werden die langen Zeitintervalle im Standby-Modus auf 30-45 min eingestellt und im Event-Modus in ihrer Länge auf ein Viertel bis ein Zehntel verkürzt. Diese langen Zeitintervalle gewährleisten ein sicheres Erkennen eines Events (also zum Beispiel eines Bedarfs an einer Nachfüllung mit Waren) bei möglichst geringer Belastung der Batterie zur Stromversorgung der Anordnung.

In einer weiteren Ausgestaltung des Verfahrens nach der Erfindung wird jeder Abtastvorgang auf vier Meldeintervalle des Sensors ausgerichtet, in denen die Steuereinrichtung drei Meldeintervalle Zeit hat, sich bereit zu machen und den Sensor auf eine Parameteränderung abzutasten, und ein Meldeintervall Zeit hat, mit dem Sensor zu kommunizieren. Auf diese Weise wird das Senden, das die hauptsächliche Belastung der Batterie ausmacht, eines Bedarfssignals an die Datenbank der Anordnung so weit wie möglich reduziert.

Ausführungsbeispiele der Erfindung werden im Folgenden unter Bezugnahme auf die Zeichnungen näher beschrieben. Es zeigt:
- Figur 1: ein Blockschaltbild einer Anordnung zur Durchführung des Verfahrens nach der Erfindung; und
- Figur 2: ein Impulsdiagramm für zyklisches Abtasten bei dem Verfahren und der Anordnung nach der Erfindung.

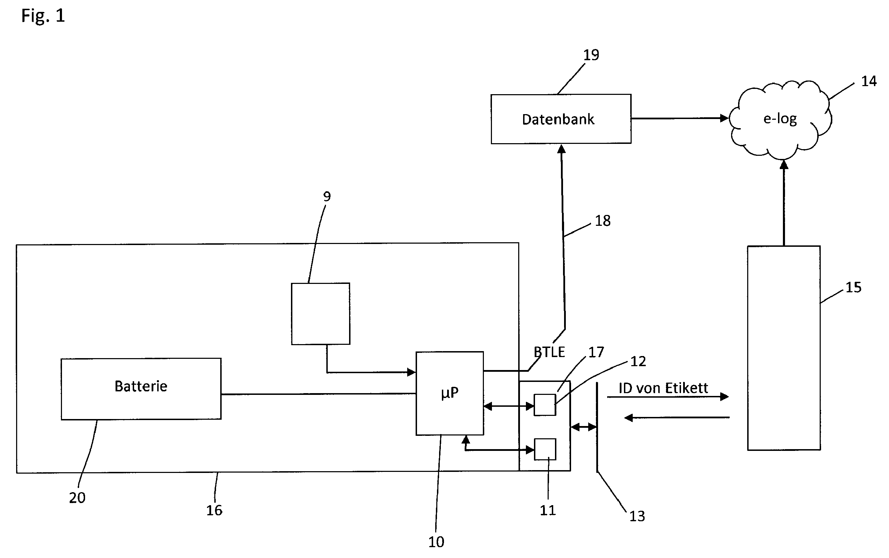

Figur 1 zeigt ein Blockschaltbild einer Anordnung zur Durchführung eines Verfahrens nach der Erfindung zum Erfassen und Bestellen von Waren zur Aufrechterhaltung eines Warenbestands in wenigstens einem mobilen Warenträger 16. In einem Vorsatzteil des Warenträgers 16 sind ein Sensor 11 und ein Feld 12 eingezeichnet. Diese arbeiten mit einem Supportknopf 9, einer Steuereinrichtung 10 (zum Beispiel einem Mikroprozessor) und einer Batterie 20 zusammen, die der Übersichtlichkeit halber in den Warenträger 16 eingezeichnet worden sind, sich in der Praxis aber in dem gleichen Vorsatzteil wie der Sensor 11 und das Feld 12 befinden, die zusammen eine mit 17 bezeichnete Elektronik des Warenträgers 16 bilden. Die Steuereinrichtung 10 kommuniziert außer mit dem Sensor 11 und dem Feld 12 über eine Bluetooth-low-energy-Verbindung BTLE mit einer Datenbank 19, die ihrerseits mit einem Internet 14 kommuniziert. Ein passives NFC-Etikett 13, das Daten über den Inhalt des Warenträgers 16 oder über die von dem Warenträger 16 aufzunehmenden und abzugebenden Waren enthält, wird an dem Vorsatzteil vorn angebracht. Es handelt sich um ein passives NFC-Etikett (NFC ist die Abkürzung für Near Field Communication). Die bis hierher beschriebene Anordnung nach Figur 1 ist durch ein Smartphone 15 steuerbar und auslesbar. Das Smartphone 15 ermittelt die ID des NFC-Etiketts 13. Über das Feld 12 kann die ID des NFC-Etiketts 13 gelesen werden. Die Steuereinrichtung 10 gibt über eine Bluetooth-Verbindung BTLE ein Triggersignal 18 an die Datenbank 19 ab zum Auslösen einer Bestellung, wobei das Triggersignal eventbasiert ist, was im Folgenden noch deutlicher werden wird.

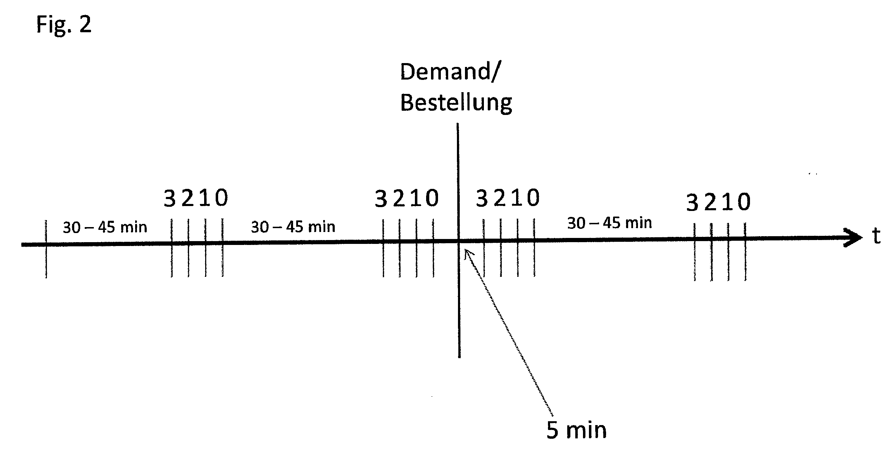

Das Arbeiten der Anordnung nach Figur 1 und die Durchführung des Verfahrens werden nun unter zusätzlicher Bezugnahme auf Figur 2, die ein Impulsdiagramm für zyklisches Abtasten des Sensors 11 zeigt, näher beschrieben. In Figur 2 ist eine Zeitachse mit t bezeichnet. Ein Ereignis oder Event, das eine Bestellung auslöst, ist mit "Demand/Bestellung" bezeichnet. Die Elektronik 17 (Sensor 11) des Warenträgers 16 meldet sich in einem Standby-Modus, also nicht wenn sie auf Demand/Bestellung steht, alle 30-45 min. Dieses lange Zeitintervall kann nach Bedarf eingestellt werden. Die Elektronik 17 meldet sich immer viermal, 3, 2, 1, 0. In dem Zeitraum 3-1 meldet sich die Elektronik 17 in ihrer Umgebung (sehr kurzes Signal) und sagt "Achtung, bereit machen". Bei 0 lässt sie den Kanal etwas länger offen. Die Steuereinrichtung 10 hat somit von 3-1 Zeit, sich bereit zu machen und zu schauen, ob sie für die Elektronik 17 eine Meldung hat. Wenn ja, kommuniziert die Steuereinrichtung 10 bei 0 mit der Elektronik 17, wobei diese Kommunikation Schreiben und/oder Lesen beinhaltet. Dieser Vorgang wiederholt sich in jedem langen Zeitintervall, also alle 30-45 min.

Steht die Elektronik 17 auf Demand/Bestellung, wird der Zeitraum von 45 min auf ca. 5 min reduziert. Nun meldet sich die Elektronik 17 alle 5 min, nämlich 3, 2, 1, 0, wobei 3-1 der Vorbereitung der Steuereinrichtung 10 dient und bei 0 die Steuereinrichtung 10 mit der Elektronik 17 kommuniziert. Wenn ein Signal Demand/Bestellung erfolgreich an die Steuereinrichtung 10 abgesetzt wurde, geht die Elektronik 17 wieder in den Spar- oder Standby-Modus und meldet sich wieder alle 30-45 min.

Dieses Betätigen der Steuerung 10 in den langen und kurzen Intervallen ist der Hauptgrund dafür, warum die Batterie eine Lebensdauer von ca. 10 Jahren hat. Das Senden von Signalen durch die Steuereinrichtung 10 über die Bluetooth-Verbindung 18 an die Datenbank 19 ist derjenige Vorgang, in welchem in der Anordnung und bei dem Verfahren nach den Figuren 1 und 2 die meiste Energie verbraucht wird.

Der Supportknopf 9 dient zum Wecken des Systems, das ansonsten in einem Zustand Schlafsteuerung durch die Steuereinrichtung 10 ist. Der Schlafzustand der Anordnung entspricht dem Standby-Modus. Wenn die Anordnung bereit ist, wird das NFC-Etikett 13 eingelesen. Im Betriebs- oder Eventmodus erfolgt die Schlafsteuerung so, wie es oben unter Bezugnahme auf das Impulsdiagramm nach Figur 2 beschrieben worden ist. Ein Vorgang des Sendens an die Datenbank 19 wird nur durch ein eventbasiertes Triggersignal ausgelöst, zum Beispiel wenn der Sensor 11 eine Änderung eines Parameters, bei dem es sich um den Füllstand, die Menge, die Lage oder das Gewicht von Ware(n) in dem mobilen Warenträger 16 handelt, meldet. Das Signal des Sensors 11 wird dabei sicherheitshalber mit Verzögerung geliefert, da ein von dem Sensor erfasster Öffnungs- oder Schließungszustand noch kein Triggersignal 18 auf der BTLE-Verbindung zwischen der Steuereinrichtung 10 und der Datenbank 19 auslösen soll. Der Sensor 11 kann bei der Anordnung und dem Verfahren nach der Erfindung jeder der vier Sensoren sein, die eingangs mit Bezug auf ein neues Warenbewirtschaftungssystem der Anmelderin beschrieben worden sind. Die Effizienz des Sensors 11 wird erfindungsgemäß dadurch gesteigert, dass er möglichst lange am Senden gehindert wird. Erst wenn der Sensor erwartet, dass ein Event/Ereignis kommt, muss schneller gesendet werden. Solange nichts passiert, ist der Sensor 11 nicht erreichbar, aus Energiespargründen.

Wenn der Sensor 11 eine erste Änderung erkennt, zum Beispiel einen Leerzustand, liegt ein erstes Event/Ereignis vor. Bei dem ersten Event wird, wie gesagt, noch keine Reaktion ausgelöst. Wenn nach dem ersten Event der Zustand geblieben ist, wird nach der definierten Zeit sofort die Information gesendet.

### Bezugszeichenliste

- BTLE: Bluetooth-Verbindung
- 9: Supportknopf
- 10: Steuereinrichtung
- 11: Sensor
- 12: Feld
- 13: NFC-Etikett (passiv)
- 14: Internet
- 15: Smartphone
- 16: Warenträger
- 17: Elektronik des Warenträgers
- 18: eventbasiertes Triggersignal
- 19: Datenbank
- 20: Batterie

## Patentansprüche

1. Verfahren zum Erfassen und Bestellen von Waren zur Aufrechterhaltung eines Warenbestands in wenigstens einem mit einer Batterie versehenen mobilen Warenträger (16),
**gekennzeichnet durch** folgende Schritte:
a) zyklisches Abtasten eines dem Warenträger (16) zugeordneten Sensors (11) zum Erfassen eines Parameters (Füllstand, Menge, Lage oder Gewicht) eines Warenbestands in dem Warenträger (16) mittels einer dem Warenträger (16) zugeordneten Steuereinrichtung (10) in langen Zeitintervallen in einem Standby-Modus,
b) Feststellen, ob die Steuereinrichtung (10) eine Parameteränderung aus dem Sensor (11) erfasst,
c) wenn nein, Wiederholen des Abtastens in den langen Zeitintervallen,
d) wenn ja, zyklisches Abtasten des Sensors (11) in wesentlich verkürzten Zeitintervallen in einem Event-Modus,
e) Senden eines eventbasierten Triggersignals (18) als ein Bestellsignal an die Datenbank (19) und
f) Zurückversetzen der Steuereinrichtung (10) in den Standby-Modus.

2. Verfahren nach Anspruch 1, **dadurch gekennzeichnet, dass** die langen Zeitintervalle im Standby-Modus auf 30 - 45 min. eingestellt und im Event-Modus in ihrer Länge auf ein Viertel bis ein Zehntel verkürzt werden.

3. Verfahren nach Anspruch 1 oder 2, **dadurch gekennzeichnet, dass** jeder Abtastvorgang auf vier Meldeintervalle (3-2-1-0) des Sensors (11) ausgerichtet wird, in denen die Steuereinrichtung (10) drei Meldeintervalle (3-2-1) Zeit hat, sich bereit zu machen und den Sensor (11) auf eine Parameteränderung abzutasten, und ein Meldeintervall (0) Zeit hat, mit dem Sensor (11) zu kommunizieren.

4. Anordnung zur Durchführung des Verfahrens nach einem der vorhergehenden Ansprüche, mit
- wenigstens einem mobilen Warenträger (16),
- wenigstens einem dem Warenträger (16) zugeordneten Sensor (11) zum Erfassen eines Parameters (Füllstand, Menge, Lage oder Gewicht) eines Warenbestands in dem Warenträger (16) zum Senden eines Parameteränderungssignals an eine Datenbank (19) zum Auslösen einer Bestellung von Ware(n) zum Kompensieren der Parameteränderung und
- einer dem Warenträger zugeordneten Batterie (20) zur Stromversorgung der Anordnung,
**gekennzeichnet durch**
- eine Steuereinrichtung (10) zum zyklischen Abtasten des Sensors (11) und, bei Erkennen einer Parameteränderung, zu einer Freigabe des Sendens eines eventbasierten Triggersignals (18) als ein Parameteränderungssignal an die Datenbank (19) zum Auslösen der Bestellung.
